# EUROPÄISCHE PATENTANMELDUNG

(11) **EP 2 204 597 A2**
(43) Veröffentlichungstag der Anmeldung: **07.07.2010**
(21) Anmeldenummer: 09014599.6
(22) Anmeldetag: 24.11.2009
(51) Int. Cl.: F16L 9/08

(54) **Stahlbetondruckrohr**

(30) Priorität: 26.11.2008 DE 102008058885
(71) Anmelder: Berding Beton GmbH, 49439 Steinfeld (DE)
(72) Erfinder: Vogler, Georg, 84094 Elsendorf (DE); Suckau, Klaus-Peter, 06493 Ballenstedt (DE); Berding, Georg, 49439 Steinfeld (DE)
(74) Vertreter: Philipp, Matthias

(57) **Zusammenfassung**

Stahlbetondruckrohr (1) mit einem Mantelrohr (10) aus Stahlbeton, **dadurch gekennzeichnet, dass** es eine innenseitig an dem Mantelrohr (10) anliegende, durchgehende fluiddichte Innenauskleidung (6) aus Kunststoff aufweist, wobei das Mantelrohr (10) eine radial durchgehend verlaufende Entspannungsöffnung (8) aufweist.

## Beschreibung

Die Erfindung betrifft ein Stahlbetondruckrohr mit einem Mantelrohr aus Stahlbeton.

Stahlbetondruckrohre müssen aufgrund der niedrigen zulässigen Betonzugspannungen mit großen Wanddicken und hohen Stahlgehalten gefertigt werden, um die Dehnungen und Rissbildungen so zu begrenzen, dass das aufgenommene flüssige Medium wie beispielsweise Wasser nicht durch die Wandung gedrückt wird.

Die Aufgabe der Erfindung besteht darin, ein Stahlbetondruckrohr mit einem Mantelrohr aus Stahlbeton dahingehend zu verbessern, dass es mit geringeren Wanddicken und niedrigeren Stahlgehalten gefertigt werden kann.

Diese Aufgabe wird erfindungsgemäß durch ein Stahlbetondruckrohr mit einem Mantelrohr aus Stahlbeton gelöst, bei dem eine innenseitig an dem Mantelrohr anliegende, durchgehende fluiddichte Innenauskleidung aus Kunststoff vorgesehen ist und das Mantelrohr eine radial durchgehend verlaufende Entspannungsöffnung aufweist.

Zweckmäßigerweise ist die Entspannungsöffnung in einem oberen Scheitelbereich des Mantelrohrs angeordnet.

Weiterhin kann die Entspannungsöffnung in einem in Längsrichtung gesehen mittleren Rohrbereich angeordnet sein.

Zweckmäßigerweise ist die Innenauskleidung im Bereich der Entspannungsöffnung mit einer Verstärkung versehen.

Es kann vorteilhaft sein, wenn die Entspannungsöffnung mit einem fluiddurchlässigen, insbesondere porösen Material, wie etwa Porenmörtel, gefüllt ist, welches bevorzugt starr ist, allerdings auch elastisch sein kann.

Es ist vorteilhaft, wenn im Bereich der Entspannungsöffnung eine Tiefbettfuge angeordnet ist, in der eine Verstärkung vertieft angeordnet sein kann.

Die Erfindung sieht weiterhin eine Verbindung zu einem weiteren Stahlbetondruckrohr vor, mit einer Tiefbettfuge in einem Übergangsbereich der Stahlbetondruckrohre, wobei an jedem Rohr ein Auskleidungsstreifen angeordnet ist, der mit einem Endbereich der jeweiligen Innenauskleidung fluiddicht verbunden ist, mit einem Überbrückungsstreifen, der beiderseits innenseitig mit den Innenauskleidungen der Rohre fluiddicht verbunden ist, wobei ein ringförmiger Zwischenraum zwischen Stirnflächen der Stahlbetondruckrohre mit einem Füllmaterial ausgefüllt ist.

Das Füllmaterial kann elastisch oder starr sein.

Als Alternative sieht die Erfindung eine Verbindung zu einem weiteren Stahlbetondruckrohr vor, mit einer Tiefbettfuge in einem Übergangsbereich der Stahlbetondruckrohre, wobei an jedem Rohr ein Auskleidungsstreifen angeordnet ist, der mit einem Endbereich der jeweiligen Innenauskleidung fluiddicht verbunden ist, mit einem Überbrückungsstreifen, der beiderseits innenseitig mit den Innenauskleidungen der Rohre fluiddicht verbunden ist, wobei der Überbrückungsstreifen innerhalb eines ringförmigen Zwischenraums zwischen Stirnflächen der Stahlbetondruckrohre einen Verlauf in Form einer im Querschnitt radial auswärts gerichteten Welle aufweist.

Hierbei kann vorgesehen sein, dass die Auskleidungsstreifen an ihren innenliegenden Endbereichen, an denen der Überbrückungsstreifen aufliegt, mit einer Abrundung versehen sind.

In einer weiteren Ausführungsform kann vorgesehen sein, dass das Stahlbetondruckrohr als Formelement wie etwa Krümmer ausgebildet ist.

Die Erfindung bezieht sich weiterhin auf ein Stahlbetondruckrohr mit einem Mantelrohr aus Stahlbeton, das eine innenseitig an dem Mantelrohr anliegende, durchgehende fluiddichte Innenverkleidung aus Kunststoff aufweist, und das insbesondere nach der Erfindung ausgebildet sein kann, bei dem an mindestens einem Ende die Innenauskleidung an einem in das Mantelrohr eingebetteten Ring aus Kunststoff befestigt ist, der im Längsschnitt U-förmig und mit einem radial von innen über einen Teil der radialen Erstreckung des Rings nach außen verlaufenden Schlitz versehen ist.

Der Ring kann eine radiale Erstreckung aufweisen, die dem 2- bis 50fachen einer Wandstärke der Innenauskleidung entspricht.

Der Ring kann eine axiale Dicke aufweisen, die dem 1,5- bis 10fachen der Wandstärke der Innenauskleidung entspricht.

Der Schlitz kann eine radiale Tiefe aufweisen, die 50 bis 99% der radialen Erstreckung des Rings entspricht.

Innenauskleidung und/oder Ring können an ihrer dem Mantelrohr zugekehrten Außenseite mit formschlüssig im Mantelrohr verankerten Haltevorsprüngen versehen sein.

Es kann vorgesehen sein, dass das Formelement aus Segmenten gebildet ist, wobei an Stossbereichen der Segmente aneinander grenzende Endabschnitte der Innenauskleidungen jeweils mittels eines den Stossbereich abdeckenden Überbrückungsstreifens fluiddicht miteinander verbunden sind.

Der Überbrückungsstreifen kann an einer Außenseite der Innenauskleidungen in einer Tiefbettfuge oder an einer Innenseite der Innenauskleidungen angeordnet sein.

Weiter kann vorgesehen sein, dass in dem Mantelrohr ein Zweigelement wie Schacht, Einstieg oder Abzweig angeordnet ist, wobei das Zweigelement und die angrenzende Innenauskleidung mittels eines Überbrückungsstreifens fluiddicht miteinander verbunden sind.

In jedem Falle kann das Stahlbetondruckrohr einen kreisrunden, ovalen, senkrechten, quadratischen oder sonstigen Querschnitt aufweisen.

Weitere Vorteile und Merkmale der Erfindung ergeben sich aus der nachfolgenden Beschreibung von Ausführungsbeispielen, wobei auf eine Zeichnung Bezug genommen ist, in der
Fig. 1 eine schematische Querschnittsansicht eines erfindungsgemäßen Stahlbetonrohrs im Bereich der Entspannungsöffnung zeigt,
Fig. 2 einen vergrößerten Ausschnitt einer Querschnittsansicht eines erfindungsgemäßen Stahlbetondruckrohrs im Bereich der Entspannungsöffnung in einer Variante zeigt,
Fig. 3 eine schematische Längsschnittansicht einer Verbindung von zwei erfindungsgemäßen Stahlbetondruckrohren zeigt,
Fig. 4 eine Variante einer Verbindung entsprechend Fig. 3 zeigt,
Fig. 5 eine Längsschnittansicht eines als Formelement ausgebildeten Stahlbetondruckrohrs nach der Erfindung,
Fig. 6 eine vergrößerte Längsschnittansicht eines Stossbereichs von Segmenten des Formteils nach Fig. 5 zeigt,
Fig. 7 eine Variante des Stoßbereichs nach Fig. 6 zeigt,
Fig. 8 eine Endverankerung der Innenauskleidung bei einer Variante des Stahlbetondruckrohrs nach der Erfindung zeigt,
Fig. 9 eine Querschnittsansicht eines mit einem Zweigelement in Form eines Schachts versehenen Stahlbetondruckrohrs zeigt,
Fig. 10 eine vergrößerte Einzelheit aus Fig. 9 zeigt,
Fig. 11 eine Querschnittsansicht eines mit einem Zweigelement in Form eines Abzweigs versehenen Stahlbetondruckrohrs zeigt, und
Fig. 12 eine vergrößerte Einzelheit aus Fig. 11 zeigt.

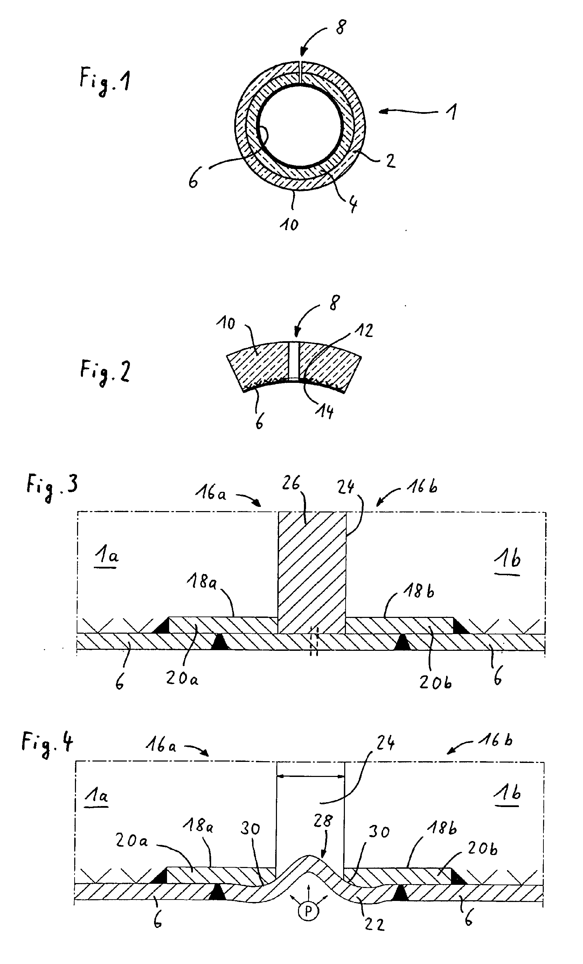

Zunächst sei anhand von Fig. 1 und 2 der Aufbau eines erfindungsgemäßen Stahlbetondruckrohrs erläutert. Fig. 1 zeigt eine Querschnittsansicht etwa in der Mitte, in dessen Längsrichtung gesehen, des Stahlbetondruckrohrs. Von außen nach innen besteht das im Ganzen mit 1 bezeichnete Stahlbetondruckrohr aus einer mit Stahlarmierungen versehenen Wandverstärkung 2, einem Stahlbetonrohr 4 sowie einer fluiddichten Innenauskleidung 6 (Inliner aus Hochdruck-Polyäthylen (PE-HD)). Erfindungsgemäß weist das Stahlbetondruckrohr 1 eine Entspannungsöffnung 8 auf, die in radialer Richtung durch die Wandverstärkung 2 und das Stahlbetonrohr 4, die gemeinsam ein Mantelrohr 10 bilden, vollständig durchgeht. Wenn der Durchmesser der Entspannungsöffnung relativ gering ist, beispielsweise einige Millimeter, und wenn im Betrieb keine zu hohen Drücke auftreten, kann die an der Innenseite des Mantelrohrs 10 anliegende Innenauskleidung 6 den radial innenliegenden Bereich der Entspannungsöffnung 1 überdecken, ohne dass eine weitere Verstärkung erforderlich ist. Die Entspannungsöffnung 8 verläuft durchgehend zwischen einer Innenfläche des Stahlbetondruckrohrs bis zu einer Außenfläche, insbesondere in einer radialen Richtung.

Bei größeren Durchmessern der Entspannungsöffnung 8 und/oder größeren Innendrücken ist es zweckmäßig, gemäß Fig. 2 eine Verstärkung der Innenauskleidung 6 im Bereich der Entspannungsöffnung 8 vorzusehen. Dies kann dadurch erfolgen, dass im Bereich der Entspannungsöffnung 8 eine Tiefbettfuge 12 angeordnet wird, in der eine ringförmige Verstärkung 14, insbesondere bestehend aus dem gleichen Material wie die Innenauskleidung 6, angeordnet und mit der Innenauskleidung 6 verbunden, beispielsweise verschweißt wird.

Im verlegten Zustand befindet sich die Entspannungsöffnung 8 vorzugsweise in einem oberen Bereich des Stahlbetondruckrohrs, insbesondere in einem Scheitelbereich oder im Scheitelpunkt des Rohrs, damit sie die Entspannungsfunktion optimal erfüllen kann.

Dadurch, dass das Mantelrohr 10 mit einer fluiddichten Innenauskleidung und einer Entspannungsöffnung versehen wird, ergeben sich erhebliche Vorteile in Bezug auf Materialeinsatz und Herstellungskosten gegenüber einem bisher üblichen Stahlbetondruckrohr. So werden beispielsweise bei einem üblichen Stahlbetondruckrohr mit einem Nenndurchmesser von 3000 mm ca. 260 kg/m³ Stahl benötigt, während beim Einsatz eines druckdichten PE-HD-Inliners mindestens 40 % Stahl und 20 bis 30 % Beton eingespart werden können. Dies liegt daran, dass bei einem druckdichten Inliner die zulässige Dehnfähigkeit des Betons bedeutend größer ist und im wesentlichen nur durch das Druckniveau eingeschränkt ist. Die zulässige Dehnfähigkeit des Betons wiederum ist abhängig von der Dicke des Inliners, dessen Dehnfähigkeit und den Umgebungsbedingungen des Stahlbetondruckrohrs im Einsatz. Hierbei ist eine ca. 5 fach größere Dehnung zulässig als bei einem herkömmlichen Stahlbetondruckrohr ohne Inliner.

Nach dem derzeitigen Normenstand können Stahlbetondruckrohre für Freispiegelleitungen bis 2,4 bar Werksprüfdruck hergestellt werden, wohingegen Rohre mit einem Werksprüfdruck größer als 2,5 bar als Stahlbetondruckrohre bezeichnet werden.

Bei herkömmlichen ausgekleideten Stahlbetonrohren wird der Inliner in der Sohle des Rohrs durch eine Bohrung geöffnet, um entstehende Gasdrücke zwischen Inliner und Beton zu entspannen. Dadurch ist es nicht möglich, Innendrücke ohne Medienverluste (z.B. Wasser) aufzunehmen.

Erfindungsgemäß wird die Innenauskleidung ohne Öffnung hergestellt, wobei der Innendruck gegebenenfalls durch Ausfüllung der Entspannungsöffnung mit einem geeigneten Material aufgenommen werden kann.

Hierzu kann vorgesehen sein, dass die Entspannungsöffnung mit einem fluiddurchlässigen, insbesondere einem porösen Füllmaterial, wie etwa Porenmörtel, gefüllt ist. Dadurch können auch höhere Innendrücke mit oder ohne Anordnung einer Verstärkung 14 aufgenommen werden.

Fig. 3 und 4 erläutern zwei unterschiedliche Verbindungsanordnungen von erfindungsgemäßen Stahlbetondruckrohren. Fig. 3 zeigt eine starre Verbindung zwischen zwei Stahlbetondruckrohren 1a, b, die in der Ausführung relativ preisgünstig ist. Beide Rohre sind an ihren stirnseitigen Endabschnitten 16a, b mit einer Tiefbettfuge 18a, b und einer darin angeordneten, ringförmig entlang des inneren Umfangs der Tiefbettfuge laufenden Verstärkung in Form von Auskleidungsstreifen 20a, b versehen, die mit der jeweiligen Innenauskleidung 6 verschweißt sind. Ein im Durchmesser den Innenauskleidungen 6 entsprechender, ringförmig umlaufender Überbrückungsstreifen 22 ist mit den stirnseitigen Enden der Innenauskleidungen 6 verschweißt, und ein zwischen den stirnseitigen Endabschnitten 16a, b der Stahlbetondruckrohre 1a, b verbleibender Spalt 24 ist mit einem Füllmaterial 26 ausgefüllt. In der Regel handelt es sich hierbei um ein starres Füllmaterial, das in bestimmten Fällen jedoch elastisch sein kann.

Diese Verbindung lässt in der Regel keine oder nur geringe Verformungen (Temperatur, Setzungen usw.) zu, ist jedoch in der Ausführung preisgünstig.

Fig. 4 zeigt eine Variante der vorstehend beschriebenen Rohrverbindung, bei der die Ausgestaltung der stirnseitigen Endabschnitte 16a, b der miteinander zu verbindenden Stahlbetondruckrohre 1a, b mit Tiefbettfugen 18a, b und Verstärkungen (Auskleidungsstreifen) 20a, b übereinstimmend ist. Im Unterschied zu der Verbindung nach Fig. 3 weist der Überbrückungsstreifen 22 allerdings eine Bewegungsreserve in Form einer im Querschnitt radial auswärts gerichteten Welle 28 auf, so dass zusätzlich der Innendruck günstig aufgenommen werden kann, ohne dass es einer Ausfüllung des Spalts 24 bedarf.

Wie Fig. 4 weiter zeigt, sind die Auskleidungsstreifen 20a, b im Unterschied zu der Ausführung nach Fig. 3 im Bereich ihrer stirnseitigen Enden mit einer Abrundung 30 versehen, um die auf den Überbrückungsstreifen 22 wirkenden Biegespannungen zu reduzieren.

Obwohl bei der Ausführung nach Fig. 4 der Spalt 24 normalerweise nicht mit einem Füllmaterial ausgefüllt wird, könnte in besonderen Fällen ein elastisches Material zur Druckentlastung des Überbrückungsstreifens 22 vorgesehen sein.

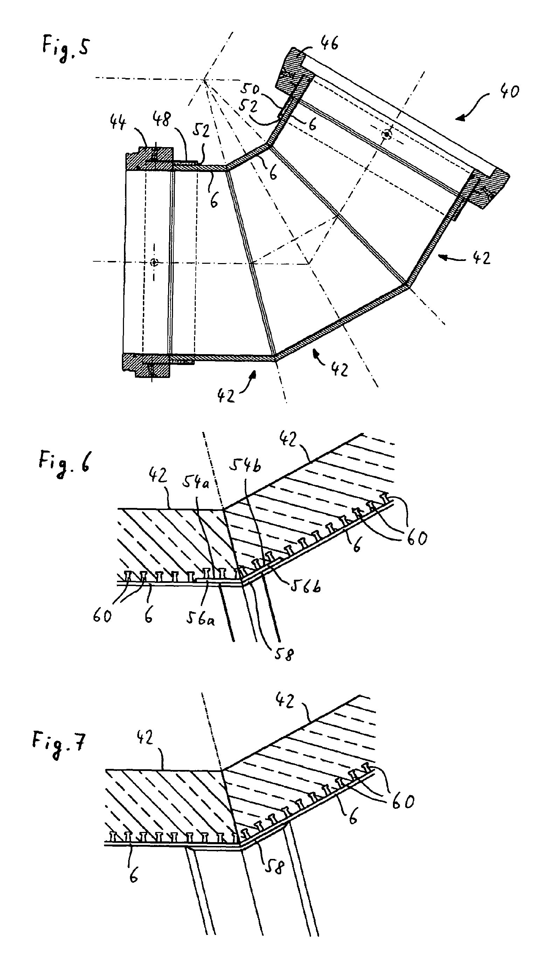

In einem weiteren Aspekt bezieht sich die vorliegende Erfindung auf die Ausbildung eines Stahlbetondruckrohrs als Formelement wie etwa einen Krümmer, wie er in Fig. 5 dargestellt ist. Der Krümmer 40 besteht aus mehreren, hierbei drei Segmenten 42, an deren Enden einerseits ein Stahlbetonspitzende 44 und andererseits eine Stahlbetonmuffe 46 angesetzt sind. Jeweils ein Stahlmantel 48, 50 ist in das Stahlbetonspitzende 44 bzw. die Stahlbetonmuffe 46 eingebunden, wobei ein Spaltbereich zwischen dem Stahlmantel und dem jeweiligen Segment 42 mit einem Zementmörtelverguss 52 ausgefüllt ist. Die Segmente 42 bestehen aus Stahlbetonrohr, welches nach der vorläufigen Fertigstellung des Krümmers nach Fig. 5 gewissermaßen als verlorene Schalung für ein um die Segmente 42 herum aufzubringendes, als Wandverstärkung dienendes Stahlbetonrohr (nicht dargestellt) dient, so dass ein Mantelrohr entsprechend den Ausführungsfonnen nach Fig. 1 - 4 gebildet wird.

Jedes Segment 42 ist innenseitig mit einer Innenauskleidung 6 versehen, die in Stoss- bzw. Übergangsbereichen zwischen aneinanderstoßenden Segmenten 42 fluiddicht miteinander verbunden sind. Diese Verbindung zeigen Fig. 6 und Fig. 7 in zwei Varianten. Fig. 6 zeigt eine jeweils im Stossbereich der Segmente 42 ausgebildete Tiefbettfuge 54a, b mit darin angeordneten Auskleidungsstreifen 56a, b, wobei zwischen den in einem Abstand voneinander endenden Innenauskleidungen 6 ein Überbrückungsstreifen 58 angeordnet und beiderseits mit den Innenauskleidungen 6 verschweißt ist.

Fig. 7 zeigt eine Ausführung ohne Tiefbettfuge, wobei die aneinanderstoßenden Innenauskleidungen 6 mit einem Überbrückungsstreifen 58 überklebt sind.

Fig. 6 und 7 zeigen weiterhin eine vorteilhafte Anbindung der Innenauskleidung 6 an das jeweils außerhalb befindliche Mantelrohr 10, die bei jeder Ausführung der Erfindung eingesetzt werden kann. Hierbei ist die Innenauskleidung 6 an ihrer dem Mantelrohr 10 zugewandten Außenseite mit formschlüssig im Mantelrohr verankerten Haltevorsprüngen 60 versehen, die jeweils einen erweiterten Kopf aufweisen.

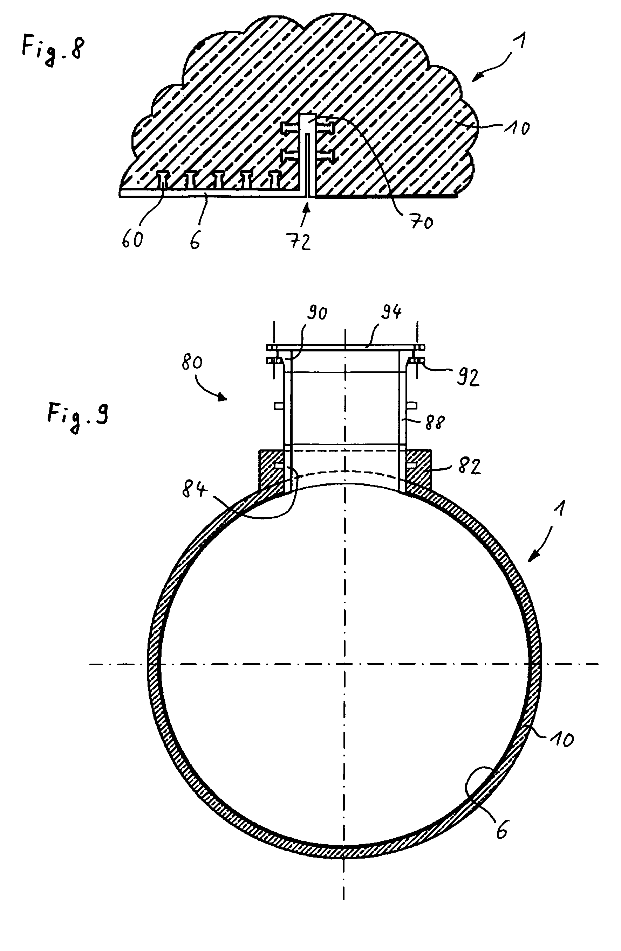

Fig. 8 zeigt eine weitere Variante der Erfindung, bei der ein mit einer Innenauskleidung 6 versehenes Stahlbetondruckrohr an mindestens einem Ende mit einem in das Mantelrohr 10 eingebetteten Ring 70 aus Kunststoff versehen ist, an dem die Innenauskleidung 6 befestigt oder einstückig mit diesem ausgebildet ist. Der Ring 70 ist im Längsschnitt U-förmig mit einem radial von innen über einen Teil der radialen Erstreckung des Rings nach außen verlaufenden Schlitz 72 ausgebildet, der mit dem Inneren des Stahlbetondruckrohrs in Verbindung steht, so dass der Druck sich auf beide in axialer Richtung einander gegenüberliegenden Teilbereiche des Rings auswirken und diese gegen das umgebende Material des Mantelrohrs andrücken kann, wodurch eine Fluidabdichtung erzielt wird.

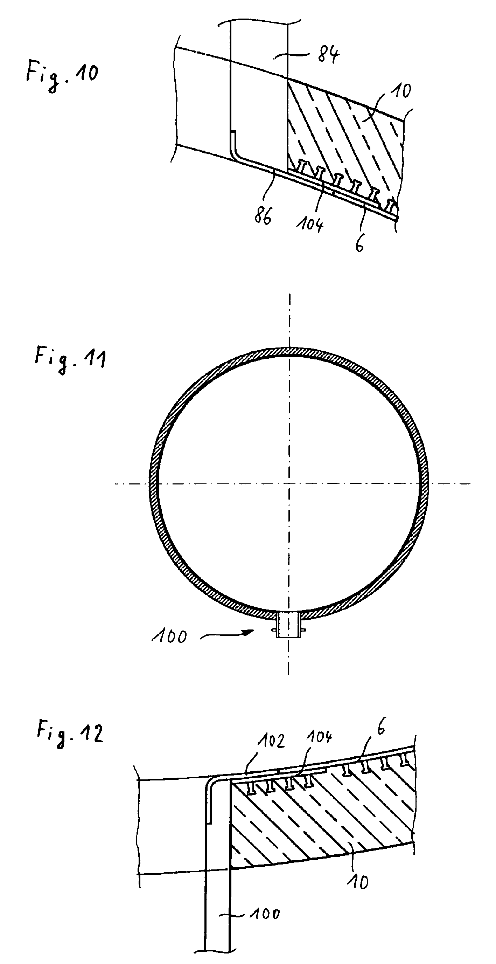

Fig. 9 bis 12 erläutern weitere Ausgestaltungen der Erfindung, wobei an dem Stahlbetondruckrohr ein Zweigelement wie Schacht, Einstieg, Abzweig o.ä. angeordnet sein kann. Fig. 9 zeigt einen Einstieg 80, wobei an dem mit der Innenauskleidung 6 versehenen Mantelrohr 10 eine außenliegende Rohrverstärkung 82 angeordnet ist, in der ein Rohrabzweig 84 aus HD-PE aufgenommen ist. Der Rohrabzweig 84 ist, wie die Einzelheit nach Fig. 10 zeigt, mittels eines den Stossbereich abdeckenden Überbrückungsstreifens 86 fluiddicht mit der Innenauskleidung 6 verbunden. Wie Fig. 9 weiter zeigt, trägt der Rohrabzweig 84 ein Anschlussrohr 88 aus HD-PE, an dem wiederum ein Vorschweißbund 90 aus HD-PE mit Losflansch 92 und Blindflansch 94 befestigt ist.

Fig. 11 zeigt eine Variante der vorstehend beschriebenen Ausführung, bei der ein Stahlbetondruckrohr mit einem nach unten abgehenden Abzweig 100 versehen ist. Der Abzweig 100 besteht aus HD-PE und ist in einem Stossbereich, wie Fig. 12 zeigt, mittels eines Überbrückungsstreifens 102 mit der Innenauskleidung 6 fluiddicht verbunden.

Wie Fig. 10 und 12 zeigen, kann im Stoßbereich von Überbrückungsstreifen 86 bzw. 102 und Innenauskleidung 6 ein außenliegender Verstärkungsstreifen 104 angeordnet sein, der eine sichere und dichte Verbindung dazwischen gewährleistet.

### Bezugszeichenliste

- 1: Stahlbetondruckrohr
- 1a, b: Stahlbetondruckrohr
- 2: Wandverstärkung
- 4: Stahlbetonrohr
- 4a, b: Stahlbetonrohr
- 6: Innenauskleidung
- 8: Entspannungsöffnung
- 10: Mantelrohr
- 12: Tiefbettfuge
- 14: Auskleidungsstreifen (Verstärkung)
- 16a, b: stirnseitiger Endabschnitt
- 18a, b: Tiefbettfuge
- 20a, b: Auskleidungsstreifen (Verstärkung)
- 22: Überbrückungsstreifen
- 24: Spalt
- 26: Füllmaterial
- 28: Welle
- 30: Abrundung
- 40: Krümmer
- 42: Segment
- 44: Stahlbetonspitzende
- 46: Stahlbetonmuffe
- 48,50: Stahlmantel
- 52: Zementmörtelverguss
- 54a, b: Tiefbettfuge
- 56a, b: Auskleidungsstreifen
- 58: Überbrückungsstreifen
- 60: Haltevorsprung
- 70: Ring
- 72: Schlitz
- 80: Einstieg
- 82: Rohrverstärkung
- 84: Rohrabzweig
- 86: Überbrückungsstreifen
- 88: Anschlussrohr
- 90: Vorschweißbund
- 92: Losflansch
- 94: Blindflansch
- 100: Abzweig
- 102: Überbrückungsstreifen
- 104: Verstärkungsstreifen

## Patentansprüche

1. Stahlbetondruckrohr (1) mit einem Mantelrohr (10) aus Stahlbeton, **dadurch gekennzeichnet, dass** es eine innenseitig an dem Mantelrohr (10) anliegende, durchgehende fluiddichte Innenauskleidung (6) aus Kunststoff aufweist, wobei das Mantelrohr (10) eine radial durchgehend verlaufende Entspannungsöffnung (8) aufweist.

2. Stahlbetondruckrohr nach Anspruch 1, **dadurch gekennzeichnet, dass** die Entspannungsöffnung (8) in einem oberen Scheitelbereich des Mantelrohrs angeordnet ist.

3. Stahlbetondruckrohr nach Anspruch 1 oder 2, **dadurch gekennzeichnet, dass** die Entspannungsöffnung (8) in einem in Längsrichtung gesehen mittleren Rohrbereich angeordnet ist.

4. Stahlbetondruckrohr nach einem der vorangehenden Ansprüche, **dadurch gekennzeichnet, dass** die Innenauskleidung (6) im Bereich der Entspannungsöffnung (8) mit einer Verstärkung (14) versehen ist.

5. Stahlbetondruckrohr nach einem der vorangehenden Ansprüche, **dadurch gekennzeichnet, dass** die Entspannungsöffnung (8) mit einem fluiddurchlässigen, insbesondere porösen Material, etwa Porenmörtel, gefüllt ist.

6. Stahlbetondruckrohr nach einem der vorangehenden Ansprüche, **dadurch gekennzeichnet, dass** im Bereich der Entspannungsöffnung (8) eine Tiefbettfuge (12) angeordnet ist.

7. Stahlbetondruckrohr nach einem der vorangehenden Ansprüche, **gekennzeichnet durch** eine Verbindung zu einem weiteren Stahlbetondruckrohr, mit einer Tiefbettfuge (18a, b) in einem Übergangsbereich der Stahlbetondruckrohre, wobei an jedem Stahlbetondruckrohr ein Auskleidungsstreifen (20a, b) angeordnet ist, der mit einem Endbereich der jeweiligen Innenauskleidung (6) fluiddicht verbunden ist, mit einem Überbrückungsstreifen (22), der beiderseits innenseitig mit den Innenauskleidungen (6) der Rohre fluiddicht verbunden ist, wobei ein ringförmiger Zwischenraum (24) zwischen Stirnflächen der Stahlbetondruckrohre mit einem Füllmaterial (26) ausgefüllt ist.

8. Stahlbetondruckrohr nach einem der vorangehenden Ansprüche, **dadurch gekennzeichnet, dass** das Füllmaterial elastisch oder starr ist.

9. Stahlbetondruckrohr nach einem der Ansprüche 1 bis 6, **gekennzeichnet durch** eine Verbindung zu einem weiteren Stahlbetondruckrohr, mit einer Tiefbettfuge (18a, b) in einem Übergangsbereich der Stahlbetondruckrohre, wobei an jedem Stahlbetondruckrohr ein Auskleidungsstreifen (20a, b) angeordnet ist, der mit einem Endbereich der jeweiligen Innenauskleidung (6) fluiddicht verbunden ist, mit einem Überbrückungsstreifen (22), der beiderseits innenseitig mit den Innenauskleidungen (6) der Rohre fluiddicht verbunden ist, wobei der Überbrückungsstreifen (22) innerhalb eines ringförmigen Zwischenraums (24) zwischen Stirnflächen der Stahlbetondruckrohre einen Verlauf in Form einer im Querschnitt radial auswärts gerichteten Welle (28) aufweist.

10. Stahlbetondruckrohr nach Anspruch 9, **dadurch gekennzeichnet, dass** die Auskleidungsstreifen (20a, b) an ihren innenliegenden Endbereichen, an denen der Überbrückungsstreifen (22) aufliegt, mit einer Abrundung (30) versehen sind.

11. Stahlbetondruckrohr mit einem Mantelrohr (10) aus Stahlbeton, das eine innenseitig an dem Mantelrohr (10) anliegende, durchgehende fluiddichte Innenauskleidung (6) aus Kunststoff aufweist, insbesondere nach einem der vorangehenden Ansprüche, **dadurch gekennzeichnet, dass** an mindestens einem Ende die Innenauskleidung (6) an einem in das Mantelrohr (10) eingebetteten Ring (70) aus Kunststoff befestigt ist, der im Längsschnitt U-förmig und mit einem radial von innen über einen Teil der radialen Erstreckung des Rings (70) nach außen verlaufenden Schlitz (72) versehen ist.

12. Stahlbetondruckrohr nach Anspruch 11, **dadurch gekennzeichnet, dass** der Ring (70) eine radiale Erstreckung aufweist, die dem 2- bis 50fachen einer Wandstärke der Innenauskleidung (6) entspricht.

13. Stahlbetondruckrohr nach einem der vorangehenden Ansprüche, **dadurch gekennzeichnet, dass** die Innenauskleidung (6) an ihrer dem Mantelrohr (10) zugekehrten Außenseite mit formschlüssig in dem Mantelrohr (10) verankerten Haltevorsprüngen (60) versehen ist.

14. Stahlbetondruckrohr nach einem der Ansprüche 11 bis 13, **dadurch gekennzeichnet, dass** der Ring (70) an seiner dem Mantelrohr (10) zugekehrten Außenseite mit formschlüssig in dem Mantelrohr verankerten Haltevorsprüngen (60) versehen ist.

15. Stahlbetondruckrohr nach Anspruch 14, **dadurch gekennzeichnet, dass** das Formelement aus Segmenten gebildet ist, wobei an Stoßbereichen der Segmente aneinandergrenzende Endabschnitte der Innenauskleidung jeweils mittels eines den Stoßbereich abdeckenden Überbrückungsstreifens (58) fluiddicht verbunden sind.

16. Stahlbetondruckrohr nach Anspruch 15, **dadurch gekennzeichnet, dass** der Überbrückungsstreifen (58) an einer Außenseite der Innenauskleidung (6) in einer Tiefbettfuge (54a, b) oder an einer Innenseite der Innenauskleidung (6) angeordnet ist.
